# EUROPEAN PATENT SPECIFICATION

(11) **EP 1 978 271 B1**
(45) Date of publication and mention of the grant of the patent: **16.05.2012**
(21) Application number: 08251298.9
(22) Date of filing: 03.04.2008
(51) Int. Cl.: F16D 48/02, F16K 24/04

(54) **Bleeder device**
Auslassvorrichtung
Dispositif purgeur

(30) Priority: 05.04.2007 JP 2007099554
(43) Date of publication of application: 08.10.2008
(73) Proprietor: Toyota Jidosha Kabushiki Kaisha, Toyota-shi, Aichi-ken 471-8571 (JP)
(72) Inventor: Ota, Masayoshi c/o Toyota Jidosha Kabushiki Kaisha, Aichi-ken, 471-8571 (JP)
(74) Representative: Albutt, Anthony John

(56) References cited:
- FR-A1- 2 816 900
- JP-A- 8 184 302
- JP-A- 10 047 513
- JP-A- 2000 028 022

## Description

### FIELD OF THE INVENTION

The present invention relates to a bleeder device.

### BACKGROUND

In a vehicle such as an automobile, a clutch is provided between an engine and a transmission for connecting or disconnecting them. This clutch includes an engaging member that is connected to an output shaft of the engine and integrally rotates with the output shaft, a clutch plate that is connected to an input shaft of the transmission and integrally rotates with the input shaft, and a lever that is biased in a direction for engagement to push the engaging member toward the clutch plate to bring the engaging member and the clutch plate into an engaged state. When the engaging member is pushed toward the clutch plate by the lever, the engaging member and the clutch plate are engaged and the engine and the transmission are connected by the clutch.

When the above clutch is a hydraulic clutch, a cylinder apparatus is used for driving the clutch. The cylinder apparatus includes a piston, a spring, and a hydraulic circuit. The piston can slide on an outer peripheral surface of a shaft member in an axial direction of the shaft member to move toward or away from the lever. The shaft member and the clutch plate are arranged on the same axis. The spring biases the piston toward a reference position, which is a position where the piston is abutted against the lever. The hydraulic circuit causes the piston to move from the reference position toward the lever by hydraulic pressure. The hydraulic circuit provides a pressure chamber, which is defined at an end of the piston opposed to the end on the side of the lever, with oil via an oil pipe so as to move the piston from the reference position toward the lever by a force based on the hydraulic pressure in the pressure chamber. The movement of the piston by the hydraulic pressure causes the lever to move in a direction for disengagement, which is the opposite direction of the above direction for engagement. Then the clutch plate and the engaging member are disengaged and the engine and the transmission are disconnected by the clutch.

In the hydraulic circuit, a bleeder device is provided for bleeding air mixed into the oil to the outside. One example of such a bleeding device is a type including a main body having a pair of ports, an oil passage for connecting the ports, and a vent passage connected to the oil passage and to the outside, wherein the vent passage is open and blocked by a bleeder plug as described in Japanese Laid-open publication 2000-28022. Air bleeding using this bleeder device is performed by operating the bleeder plug to bring the vent passage into communication with the outside and bleeding air mixed into the oil in the hydraulic circuit from the oil passage through the bleeder device to the outside. After the air bleeding is complete, the bleeder plug is operated to bring block the vent passage.

In the cylinder apparatus for driving the clutch, the piston is in a state of being abutted against the clutch lever by a biasing force of a spring. However, when the transmission is removed from an automobile, the cylinder apparatus provided on the side of the transmission is disconnected from the clutch lever provided on the side of the engine and the oil pipe connected to the cylinder apparatus is disconnected to release the pressure chamber to the outside. Then, the piston of the cylinder apparatus is separated from the lever and moved toward the lever by the biasing force of the spring. In this state, the volume of the pressure chamber is expanded and oil remaining in the oil supply passage communicating with the pressure chamber flows into the pressure chamber.

When the transmission is in a state being mounted in an automobile, a position nearest to the lever within a range of piston movement by the hydraulic pressure is limited by the lever. However, when the transmission is removed from an automobile and the cylinder apparatus is disconnected from the clutch lever, the limitation on the range of piston movement by the lever is released. Accordingly, the piston is displaced outside the range of the piston movement to a position nearer to the lever than the nearest position as described above.

In such a position outside the normal range of piston movement nearer to the lever, foreign matter such as dusts adheres to an outer peripheral surface of the shaft member. Therefore, the movement of the piston to such a position causes sandwiching of the foreign matter between the piston and the shaft member, preventing movement of the piston. When the transmission is re-assembled in an automobile, even if the piston is attempted to be displaced by the hydraulic pressure in a direction to release the lever in such a situation, this does not work successfully and reliability is reduced when the clutch is driven.

Thus, conventionally, when the transmission was removed from an automobile, the cylinder apparatus was replaced by a new one and the transmission was re-assembled in the automobile to avoid the above disadvantage.

However, replacement of the cylinder apparatus by a new one each time the transmission is removed from an automobile adds costs and labor therefor.

Japanese Patent JP 08 184302 discloses a multistage cylinder device that has an air bleeding structure such as a pressure oil leading in circuit. A pressure oil supply circuit to supply the pressure oil to the multistage hydraulic cylinder device, and an air bleeding circuit communicating with the outside are branched from the pressure oil leading-in circuit and a change-over valve to make the pressure oil leading-in circuit alternatively communicate with the pressure oil supply circuit or the air bleeding circuit is provided at the above branched spot.

### SUMMARY

An object of the present invention is to provide a bleeder device used for a hydraulic circuit of a cylinder apparatus for driving a hydraulic clutch for preventing a foreign matter from being sandwiched between a piston and a shaft member when the cylinder apparatus is disconnected from a lever.

In one aspect of the invention, a bleeder device (26) is provided. The bleeder comprises a main body (41) having a pair of ports (26a) and an oil passage (42) for connecting the ports (26a), wherein each of the ports (26a) is connectable to an oil pipe (25) ; and a bleeder plug (45) having a means for communicating or blocking a vent passage (48) connected to the oil passage (42) and to outside, characterized in that the bleeder device (26) also comprises a means for communicating or blocking the ports (26a) in the oil passage (42) . The bleeder plug (45) has the means for communicating or blocking the ports (26a) in the oil passage (42) separately from the means for communicating or blocking the vent passage (48).

In another aspect of the invention, the bleeder plug (45) is capable of performing a first movement for communicating or blocking the vent passage (48) and a second movement for communicating or blocking the ports (26a) in the oil passage (42), separately.

In still a further aspect of the invention, the direction of the first movement and the direction of the second movement are different.

In another aspect of the invention, the first movement includes one of rotational movement of the bleeder plug (45) around the center line thereof and sliding movement of the bleeder plug (45) in a direction of the center line thereof, and the second movement is the other of the rotational movement and the sliding movement.

In yet another aspect of the invention, the bleeder plug (45) is cylindrical in shape, rotatable around the center line and slidable in a direction of the center line, the first movement is the rotational movement around the center line and the second movement is the sliding movement in a direction of the center line, the vent passage (48) includes a first open end (48b), formed in the bleeder plug (45) and opening to outside, and a second open end (48a), opening to an outer peripheral surface of the plug (45), and in the first movement, the bleeder plug (45) communicates or blocks the second open end (48a) of the vent passage (48) to the oil passage (42).

In another aspect of the invention, the bleeder plug (45) is cylindrical in shape, includes male threads (54) at an outer peripheral surface thereof, and is threaded into the main body (41), the vent passage (48) includes a first open end (48b), formed in the bleeder plug (45) and opening to outside, and a second open end (48a), opening to the outer peripheral surface of the plug (45), communication or blockage of the vent passage (48) is performed by a rotational movement of the bleeder plug (45) around the center line thereof so that the second open end (48b) is communicated with or blocked from the oil passage (42), and communication or blockage of the ports (26a) in the oil passage (42) is performed by a sliding movement of the bleeder plug (45) in a direction of the center line occurred simultaneously with the rotational movement due to the action of the male threads (54) during the rotational movement.

### BRIEF DESCRIPTION OF THE DRAWINGS

The invention, together with objects and advantages thereof, may best be understood by reference to the following description of the presently preferred embodiments together with the accompanying drawings in which:
Fig. 1 is an enlarged cross-sectional view illustrating a connection portion between a transmission and an engine of an automobile;
Fig. 2 is an enlarged cross-sectional view illustrating a cylinder apparatus around a piston for driving a clutch;
Fig. 3 is an enlarged cross-sectional view illustrating the cylinder apparatus around the piston;
Fig. 4 is a cross-sectional view around the cylinder apparatus when the transmission is removed from an automobile;
Fig. 5 is an enlarged cross-section view illustrating the cylinder apparatus around the piston;
Figs. 6 (a) to (c) are cross-sectional views illustrating a bleeder device provided in a hydraulic circuit for driving the cylinder apparatus according to a preferred embodiment, Fig. 6 (d) is an enlarged cross-sectional view of a contact portion of the outer peripheral surface of a bleeder plug and an inner peripheral surface of a rubber material in the bleeder device, and Fig. 6 (e) is an enlarged cross-sectional view of another example of the contact portion;
Figs. 7 (a) and (b) are cross-sectional views of another example of the bleeder device;
Figs. 8 (a) and (b) are cross-sectional views of another example of the bleeder device;
Figs. 9 (a) and (b) are cross-sectional views of another example of the bleeder device; and
Figs. 10 (a) and (b) are cross-sectional views of another example of the bleeder device.

### DESCRIPTION OF EXEMPLARY PREFERRED EMBODIMENTS

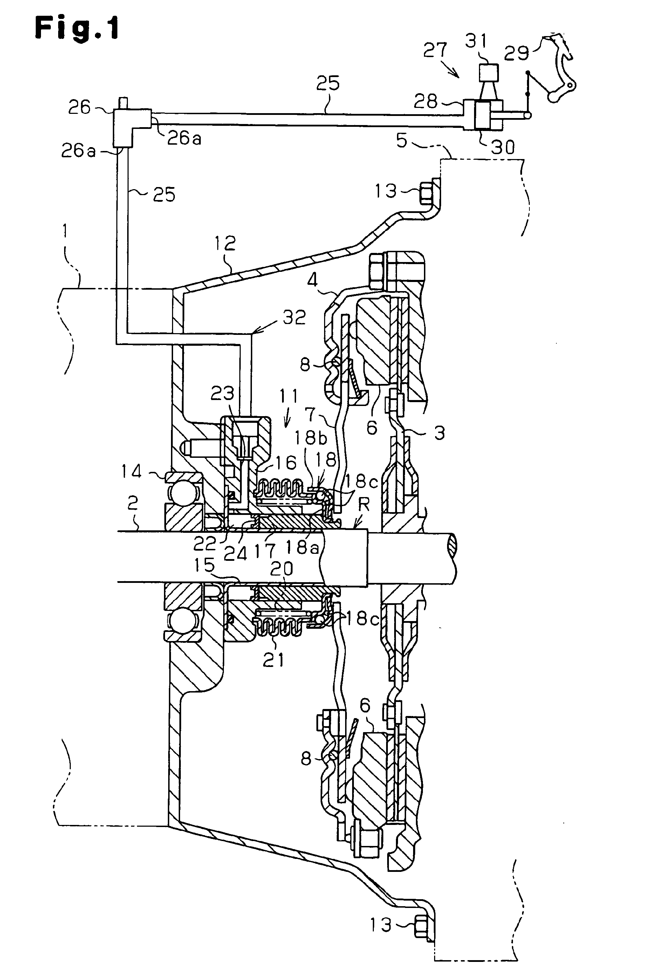

A preferred embodiment of a bleeder device in accordance with the present invention attached to an oil pipe of a cylinder apparatus used for driving a clutch in an automobile is described in the following detailed description with reference to Figs. 1 to 6.

The clutch in an automobile is provided between an engine and a transmission and driven to connect or disconnect them. As illustrated in Fig. 1, the clutch includes a clutch plate 3 that is connected to an input shaft 2 of a transmission 1 and integrally rotates with the input shaft 2, and a clutch cover 4 that is connected to an output shaft (not shown) of an engine 5 and integrally rotates with the output shaft. The clutch plate 3 and the clutch cover 4 are disposed on the same axis as the input shaft 2 of the transmission 1. The input shaft 2 penetrates through the clutch plate 3 in such a manner as to be removable from the clutch plate 3 in an axial direction of the shaft 2.

A diaphragm spring 7 is supported by the clutch cover 4 and an engaging member 6 for engaging with the clutch plate 3 is attached to the diaphragm spring 7. The diaphragm spring 7 serves as a lever for biasing the engaging member 6 in a direction for engagement to push the engaging member 6 toward the clutch plate 3 (the right side direction in Fig. 1). More specifically, the diaphragm spring 7 is formed of a disc spring for biasing the engaging member 6 in the direction for engagement and has a biasing function to bias the engagement member 6 in that direction.

The engaging member 6 is attached to the diaphragm spring 7 at a portion farthest from the input shaft 2. The diaphragm spring 7 contacts with a supporting portion 8 provided on the clutch cover 4 at a position between a portion closest to the input shaft 2 and the portion to which the engaging member 6 is attached. When the portion of the diaphragm spring 7 closest to the input shaft 2 is pushed toward the clutch plate 3, the diaphragm spring 7 is displaced in a rotational direction around the supporting portion 8 as well as a direction for disengagement, which is the opposite direction from the direction for engagement. That is, the diaphragm spring 7 rotates to the left (counterclockwise) and the engaging member 6 disengages from the clutch plate 3.

Accordingly, when the portion of the diaphragm spring 7 closest to the input shaft 2 is not pushed toward the clutch plate 3, the engaging member 6 is biased in the direction for engagement by being pushed against the clutch plate 3 by the biasing force of the diaphragm spring 7 so that the engaging member 6 and the clutch plate 3 are brought into an engaged state. In this state, the engine 5 and the transmission 1 are connected by the clutch and rotational motion between the engine 5 and the transmission 1 is transmitted.

Then, when the portion of the diaphragm spring 7 closest to the input shaft 2 is pushed toward the clutch plate 3, the diaphragm spring 7 is displaced in a direction for disengagement to cause the engaging member 6 to release from the clutch plate 3 so that the engaging member 6 and the clutch plate 3 are brought into a disengaged state. In this state, the engine 5 and the transmission 1 are disconnected by the clutch and rotational motion between the engine 5 and the transmission 1 is not transmitted.

Next, a cylinder apparatus 11 for driving the diaphragm spring 7 for connecting or disconnecting the clutch is explained.

The cylinder apparatus 11 is attached to a clutch housing 12. The clutch housing 12 is fixed to the engine 5 with bolts 13 and also fixed to the transmission 1 with fixtures such as bolts. A bearing 14 for rotatably supporting the input shaft 2 of the transmission 1 is provided in the clutch housing 12. The input shaft 2 of the transmission 1 penetrates through the cylinder apparatus 11 attached to the clutch housing 12.

The cylinder apparatus 11 includes a cylindrical inner body 15, an outer body 16 surrounding the inner body 15 in a circumferential direction thereof, and a cylindrical piston 17 provided between the inner body 15 and the outer body 16. Both the inner body 15 and the outer body 16 are fixed to the clutch housing 12 and extend coaxially with the input shaft 2.

The piston 17 is slidable with respect to an outer peripheral surface of the inner body 15 in a direction of the center line of the inner body 15. An end of the piston 17 on the side of the diaphragm spring 7 is exposed to the diaphragm spring 7 from inside the outer body 16. An inner ring 18a of the bearing 18 is fixed to the end of the piston 17. A spring 20 for pushing the bearing 18 and the piston 17 toward the diaphragm spring 7 is provided between the inner ring 18a of the bearing 18 and the outer body 16. A generally cylindrical bellows 21 is provided outside the spring 20 in such a manner to surround the input shaft 2 in a circumferential direction thereof. The bellows 21 is for preventing invasion of dusts to the piston 17 from the outside and may be extended or contracted in the axial direction of the input shaft 2. The two ends of the bellows 21 in the axial direction of the input shaft 2 are fixed to the outer body 16 and the inner ring 18a.

The piston 17 is biased by the spring 20 to a reference position, which is a position at which the piston 17 (more precisely, the bearing 18) abuts against the portion of the diaphragm spring 7 closest to the input shaft 2. When the piston 17 is biased by the spring 20 to the reference position, an outer ring 18b of the bearing 18 is pushed against the portion of the diaphragm spring 7 closest to the input shaft 2 by a spring force of the spring 20. In this state, when the clutch cover 4 and the diaphragm spring 7 are rotated by the rotation of the engine 5, the outer ring 18b bearing 18, which is pushed against to the diaphragm spring 7 by the biasing force of the spring 20, rotates with the diaphragm spring 7 to roll the balls 18c disposed between the inner ring 18a and the outer ring 18b of the bearing 18.

The spring 20 is for preventing occurrence of abnormal noise due to relative movement of the diaphragm spring 7 and the outer ring 18b during the rotation of the diaphragm spring 7. That is, the biasing force of the spring 20 is predetermined to be a value to prevent the relative movement of the diaphragm spring 7 and the outer ring 18b during the rotation of the diaphragm spring 7.

A pressure chamber 22 filled with oil is formed in the cylinder apparatus 11 at a portion surrounded by the inner body 15, the outer body 16, and the piston 17, or a portion adjoining the end of the piston 17 opposite from the end on the side of the diaphragm spring 7. An oil passage 23 is formed in the outer body 16 and connected to the pressure chamber 22. A sealant cap 24 is fixed to the end of the piston 17 at the side of the pressure chamber 22 for preventing oil leakage from the pressure chamber 22 to between an outer peripheral surface of the inner body 15 and an inner peripheral surface of the piston 17 and between an inner peripheral surface of the outer body 16 and an outer peripheral surface of the piston 17.

When oil is supplied into the pressure chamber 22 to increase the pressure in the pressure chamber 22, a force based on the pressure causes the piston 17 to move from the reference position toward the diaphragm spring 7 and to push the portion of the diaphragm spring 7 closest to the input shaft 2. Thus, the diaphragm spring 7 is displaced in a direction for disengagement and the engaging member 6 is released from the clutch plate 3. That is, the engaging member 6 and the clutch plate 3 are disengaged, i.e., brought into a disconnected state by the clutch.

When pressurization to oil in the chamber pressure 22 is released and the pressure in the pressure chamber 22 is decreased, the pressing force on the diaphragm spring 7 by the piston 17 is reduced. Thus, the diaphragm spring 7 is displaced in a direction for engagement by its biasing force thereof and the biasing force causes the engaging member 6 to be pushed against the clutch plate 3. That is, the engaging member 6 and the clutch plate 3 are engaged, i.e., brought into a connected state by the clutch. In this state, the piston 17, moved by the displaced diaphragm spring 7 in a direction reverse to the direction described above, returns to the reference position.

The cylinder apparatus 11 includes a hydraulic circuit 32 for supplying oil into the pressure chamber 22 to move the piston 17 from the reference position toward the diaphragm spring 7 by the force based on the hydraulic pressure in the pressure chamber 22. The hydraulic circuit 32 pressurizes or depressurizes oil in the pressure chamber 22 to move the piston 17 toward and away from the diaphragm spring 7., i.e., in a direction of the center line of the inner body 15.

The hydraulic circuit 32 includes an oil pipe 25 that is connected to the oil passage 23 of the outer body 16 in the cylinder apparatus 11 and supplies oil to or discharges oil from the pressure chamber 22 via the oil passage 23. The oil pipe 25 extends through the clutch housing 12 to the outside. A bleeder device 26 for air bleeding is provided in the extended portion of the oil pipe 25. In addition, a portion of the oil pipe 25 on the upstream side of the bleeder device 26 is connected to a pressure device 27 for pressurizing oil in the pressure chamber 22. A pair of ports 26a are provided in the bleeder device 26 and one is connected to the oil pipe 25 on the side of oil passage 23 and the other is connected to the oil pipe 25 on the side of the pressure device 27.

The pressure device 27 includes a cylinder 28 to which the oil pipe 25 is connected, a piston 30 that reciprocates in the cylinder 28 based on the depression of a clutch pedal 29, and a reservoir tank 31 connected to the cylinder 28 for supplying a deficiency of oil or receiving an excess of oil. In the pressure device 27, a neutral position of the clutch pedal 29 may be varied by manipulating a pedal adjustment screw and a neutral position of the piston 30 may be varied by manipulating a piston adjustment screw.

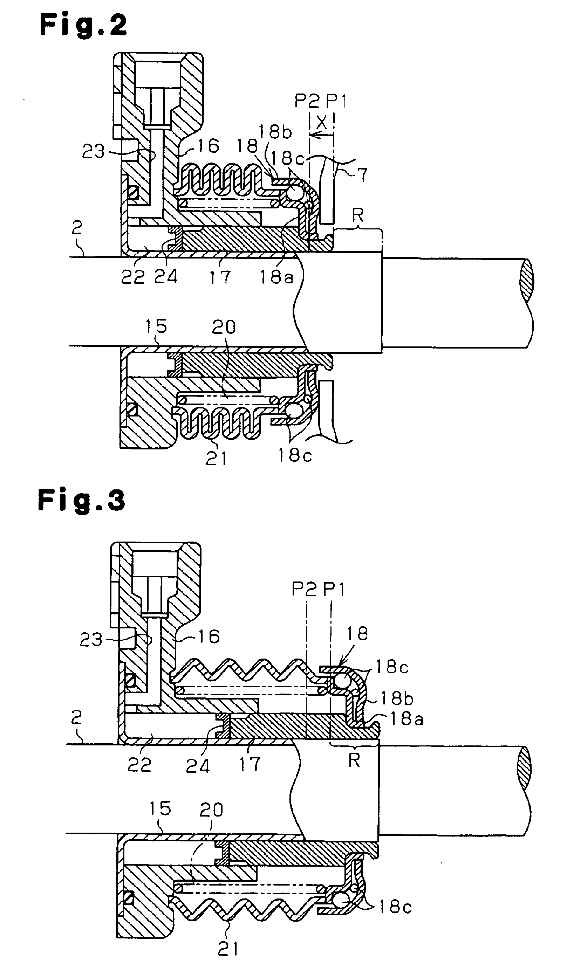

In the pressure device 27, the movement of the piston 30 by depression of the clutch pedal 29 causes oil in the cylinder 28 to be pumped to the oil pipe 25. This pressurizes the oil in the pressure chamber 22 to move the piston 17 from the reference position in a direction to expand the volume of the pressure chamber 22, whereby oil from the oil passage 23 and from the oil pipe 25 flows into the pressure chamber 22. Then, by the movement of the piston 17, the piston 17 pushes the diaphragm spring 7 at the portion closest to the input shaft 2. As a result, the diaphragm spring 7 is displaced in a direction for disengagement, the engaging member 6 and the clutch plate 3 are disengaged, and the engaging member 6 and the clutch plate 3 are brought into a disconnected state. Fig. 2 is an enlarged view illustrating the position of the piston 17 in the cylinder apparatus 11 along the center line of the inner body 15 (position P1) in this state.

When the depression of the clutch pedal 29 in Fig. 1 is released, the pedal 29 returns to its original position before the depression thereof by bias force of a non-illustrated return spring. The piston 30 of the pressure device 27 is moved to pump (suck) oil in the oil pipe 25 into the cylinder 28. Then, the pressurization of the oil in the pressure chamber 22 is released and the pushing of the piston 17 toward the diaphragm spring 7 is also released. Accordingly, the diaphragm spring 7 moves in a direction for engagement by its own biasing force, the engaging member 6 is pushed against the clutch plate 3, and the engaging member 6 and the clutch plate 3 are brought into an engaged state. In this state, since the diaphragm spring 7 moves in a direction for engagement, the piston 17 is moved in a direction to reduce the volume of the pressure chamber 22 and oil in the pressure chamber 22 flows out to the oil passage 23 and the oil pipe 25.

As illustrated in Fig. 2, following displacement of the diaphragm spring 7 in a direction for engagement as described above, the piston 17 moves from the position P1 back to the reference position P2 by the distance X to reduce the volume of the pressure chamber 22. Accordingly, depression of the clutch pedal 29 is performed for disconnecting the clutch, the piston 17 moves along the center line of the inner body in a movement range between the reference position P2 and the position P1. At the outer peripheral surface of the inner body 15, a portion outside the movement range of the piston 17 (the range between the reference position P2 and the position P1) located at the side closer to the diaphragm spring 7 (or at the side of position P1) is always exposed to the outside. Thus, it is inevitable that foreign matter such as dusts deposits on the exposed portion (referred to as "the exposed portion R" hereinafter).

The movement range of the piston 17 as described above is shifted toward the transmission 1 (to the left side in Fig. 2) as the engaging member 6 in the clutch of Fig. 1 wears. This is because the portion of the diaphragm spring 7 closest to the input shaft 2 is shifted to rotate to the left (clockwise) around the supporting portion 8 as the engaging member 6 wears. As the movement range of the piston 17 is shifted in the left direction of Fig. 2 due to increase in wear of the engaging member 6, the exposed portion R of the inner body 15 is expanded in the left direction accordingly.

Next, the movement of the piston 17 in the cylinder apparatus 11 when the transmission 1 is removed from an automobile is described.

When the transmission 1 of Fig. 1 is removed from an automobile, the following operations (i) to (iii) are performed:
(i) The pressure chamber 22 and the pressure device 27 are separated by disconnecting the oil pipe 25. For example, a portion of the oil pipe 25 upstream of the bleeder device 26, i.e., a portion of the oil pipe 25 on the side of the pressure device 27, is removed from the port 26a that is the port more distant from the pressure chamber 22 to separate the pressure chamber 22 and the pressure device 27.
(ii)The bolts 13 fixing the clutch housing 12 to the engine 5 are removed.
(iii) The overall transmission 1 is moved in a direction away from the engine 5, i.e., in the left direction in Fig. 1 by pulling the input shaft 2 of the transmission 1 out of the clutch plate 3 and separating the cylinder apparatus 11 from the diaphragm spring 7.

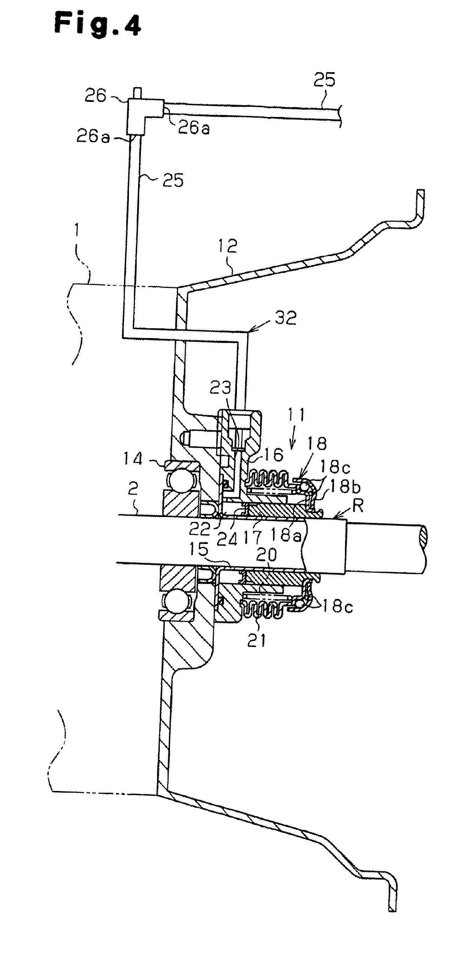

By performing the operations (i) to (iii) in order, the transmission 1 and the cylinder apparatus 11 are separated from the engine 5 and may be removed from an automobile, as illustrated in Fig. 4.

Meanwhile, when the transmission 1 is mounted in an automobile (Fig. 1), the piston 17 (more precisely, the bearing 18) is abutted against the diaphragm spring 7 by biasing force of the spring 20. However, when the transmission 1 is removed out of an automobile, the piston 17 no longer abuts against the diaphragm spring 7. Thus, the piston 17 is pushed in a direction to expand the volume of the pressure chamber 22 by the biasing force of the spring 20 (the right direction in Fig. 1). In this state, when the oil pipe 25 connected to the pressure chamber 22 is open to air, oil in the oil pipe 25 and oil in the oil passage 23 will flow into the pressure chamber 22 by the biasing force of the spring 20 as described above, whereby the piston 17 is moved in the right direction in Fig. 1. As a result, as illustrated in Fig. 3, the piston 17 is moved from the position P1, which is a position within the movement range (Between P2 and P1) closest to the exposed portion R to the exposed portion R (to the right in Fig. 3).

The disadvantage due to the above shift of the piston 17 is described below.

As described above, foreign matter such as dusts is deposited on the exposed portion R of the inner body 15. Accordingly, when the piston 17 is shifted toward the exposed portion R, the foreign matter is sandwiched between the piston 17 and the inner body 15 and interferes with movement 17 of the piston 17. When the transmission 1 is re-assembled in an automobile, even if the piston 17 is attempted to be displaced to release the diaphragm spring 7, this does not work successfully and reliability is reduced when the clutch is driven. In addition, when the engaging member 6 (Fig. 1) in the clutch wears and the exposed portion R is extended in the left direction in Fig. 3, the sandwiched foreign matter may reach the cap 24, which not only prevents the movement of the piston 17 but also reduces the sealing properties of the cap 24 with respect to the pressure chamber 22.

To solve this disadvantage, according to the present embodiment, the bleeder device 26 illustrated in Fig. 1 has a means for communicating or blocking the two ports 26a to which the oil pipe 25 is connected. When the ports 26a in the bleeder device 26 are communicated, oil may flow into or out of the pressure chamber 22. When the ports 26a are blocked, oil cannot flow into or out of the pressure chamber 22.

Then, when the transmission is removed from an automobile, the following operations are performed before the above operation (i) is performed:
A) In the pressure device 27, the piston 30 in the cylinder 28 is displaced in a direction to move away from the oil pipe 25 by manipulating a pedal adjustment screw or a piston adjustment screw so as to move such oil from the oil pipe 25 into the cylinder 28. Thus, oil in the pressure chamber 22 is drawn (sucked) into the oil passage 23 and the oil pipe 25.
B) The ports 26a in the bleeder device 26 are blocked from each other by manual operation. Thus, inflow and outflow of oil with respect to the pressure chamber 22 is prevented.

By performing the above operations A) and B), even when the transmission 1 is removed from an automobile by performing the operations (i) to (iii) following the operations A) and B), an oil pipe 25 connected to oil passage 23 will not be released for exposure to outside air.

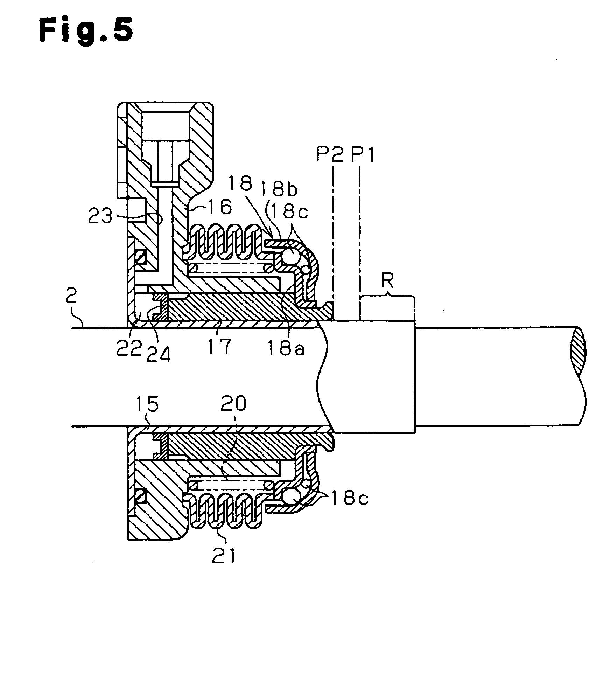

Accordingly, after the transmission 1 is removed, even if the piston 17 is pushed in a direction to expand the volume of the pressure chamber 22 by biasing force of the spring 20 (in the right direction in Fig. 1), inflow of the oil stored in the oil pipe 25 and the oil passage 23 into the pressure chamber 22 and thus the movement of the piston 17 in the right direction in Fig. 1 are prevented. Thus, as illustrated in Fig. 5, the piston 17 is held in the position within the movement range (between P2 and P1), or the reference position P2 in the example of Fig. 5 and the movement of the piston 17 out of the movement range to the exposed portion R may be avoided. Consequently, foreign matter adhered to the exposed portion R is not sandwiched between the piston 17 and the inner body 15 and the above disadvantage will not occur.

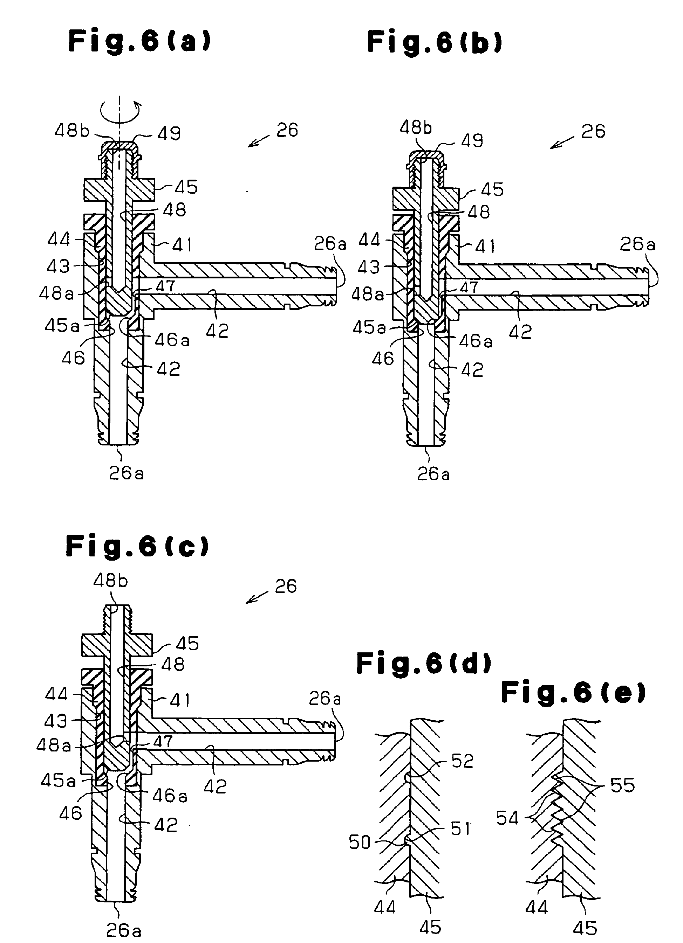

Next, the detailed configuration of the bleeder device 26 is described with reference to Fig. 6.

As illustrated in Fig. 6 (a), the two ports 26a are formed in a main body 41 of the bleeder device 26 and an oil passage 42 extends therebetween having a 90 degree bend in such a manner as to connect the ports 26a. A hole 43 to be connected to the oil passage 42 is also formed in the main body 41, a cylindrical rubber material 44 is fitted in the hole 43, and a bleeder plug 45 is fitted in the rubber material 44. A hole 46 is formed in a part of the rubber material 44 that corresponds to a distal end of the bleeder plug 45. A channel 47 is formed in a part of the rubber material 44 facing an outer peripheral surface of the bleeder plug 45 and extends along the center line of the plug 45 (dashed dotted line in Fig. 6 (a)). The oil passage 42 that connects the ports 26a of the bleeder device 26 passes through inside the hole 46, inside the rubber material 44, and inside the channel 47. In a state where the rubber material 44 is fitted in the bleeder plug 45, the outer peripheral surface of the bleeder plug 45 is pressed against the inner peripheral surface of rubber material 44 so that the sealing properties between the bleeder plug 45 and the rubber material 44 is ensured.

The bleeder plug 45 is rotatable with respect the rubber material 44 around the center line of the plug 45. A vent passage 48 is formed in the bleeder plug 45 to extend along the center line thereof. The vent passage 48 is open to the outer peripheral surface of the plug 45 at a distal end of the bleeder plug 45, (the lower end in Fig. 6(a)), or an open end 48a, bent at a 90 degree angle with respect to the center line and the opening is blocked by the inner peripheral surface of the rubber material 44. Additionally, the vent passage 48 is blocked at a proximal end of the bleeder plug 45 (an upper end in Fig. 6 (a)), or an open end 48b, by the cap 49 and released to the outside by removing the cap 49.

To communicate the vent passage 48 of the bleeder plug 45, the following operations are conducted in the bleeder device 26. Specifically, the bleeder plug 45 is rotated around the center line thereof to communicate the open end 48a located in the vent passage 48 at the distal end of the plug 45 with the channel 47 of the rubber material 44 and release the open end 48b located in the vent passage 48 at the proximal end of the plug 45 to the outside by the removal of the cap 49. Fig. 6 (c) illustrates the vent passage 48 in a communicated state. To achieve air bleeding by using the bleeder device 26, the vent passage 48 is brought into the communicated state as described above and air mixed in the hydraulic circuit 32 is expelled from the oil passage 42 via the vent passage 48 to the outside. After the air bleeding is complete, the bleeder plug 45 is rotated around the center line thereof to close the open end 48a of the vent passage 48 by the inner peripheral surface of the rubber material 44, whereby the vent passage 48 is blocked, as illustrated in Fig. 6 (a). In this state, the open end 48b of the vent passage 48 is closed by the cap 49.

As mentioned above, the bleeder plug 45 of the bleeder device 26 operates to communicate or block the vent passage 48 through the rotational movement around the center line thereof. Further, in addition to the means for communicating or blocking vent passage 48, the bleeder plug 45 has a means for communicating or blocking the two ports 26a in the oil passage 42.

The means for communicating or blocking the ports 26a in the bleeder plug 45 is described below.

The bleeder plug 45 is slidable with respect to the rubber material 44 in a direction of the center line of the plug 45. An outer peripheral surface 45a of the distal end of the bleeder plug 45 is tapered toward a tip and an inner peripheral surface 46a, which is a part of the rubber material 4 defining the hole 46 at a position opposing the bleeder plug 45, is also tapered to correspond to the outer peripheral surface 45a. Accordingly, when bleeder plug 45 is slid in a direction to fit into the rubber material 44, the outer peripheral surface 45a of the distal end of the plug 45 is pushed against the inner peripheral surface 46a of the rubber material 44 so that oil passage through the hole 46 is prevented.

In the bleeder device 26, by sliding the bleeder plug 45 in the direction of the center line thereof and closing the hole 46 by the distal end of the plug 45, the oil passage 42 connecting the ports 26a is blocked. Fig. 6(b) illustrates the oil passage 42 in a blocked state. When the transmission 1 is removed from an automobile, the flow of oil into and out of the pressure chamber 22 is prevented using the bleeder device 26. In such a case, the oil passage 42 is blocked as described above. Then, after the transmission 1 is re-assembled into an automobile, through the sliding movement of the bleeder plug 45 in the direction of the center line thereof, the distal end of the plug 45 is detached from the hole 46 to open the hole 46, whereby the oil passage 42 connecting the two ports 26a is brought into a communicated state, as illustrated in Fig. 6(a).

In summary, the bleeder plug 45 in the bleeder device 26 communicates or blocks the oil passage 42 connecting the two ports 26a through the sliding movement in a direction of the center line thereof.

As illustrated in Fig. 6(d), protrusions 50 are formed on the outer peripheral surface of the bleeder plug 45 and a pair of grooves 51, 52, into which the protrusions 50 are insertable, are formed in the inner peripheral surface of the rubber material 44. These protrusions 50 and the grooves 51, 52 extend in circular rings in a circumferential direction on the outer peripheral surface of the plug 45 and the inner peripheral surface of the rubber material 44, respectively. Of the grooves 51, 52, the groove 51 is formed at the position where the protrusion 50 is inserted into the groove 51 when the bleeder plug 45 is slid to the position to close the hole 46 by the tip of the plug 45. Thus, the insertion of the projection 50 into the groove 51 locates the bleeder plug 45 in the position where the distal end of the plug 45 closes the hole 46. The groove 52 is formed at the position where the protrusion 50 is inserted into the groove 52 when the bleeder plug 45 is slid to the position to get away from the hole 46. Thus, insertion of the projection 50 into the groove 52 locates the bleeder plug 45 in the position where the distal end of the plug 45 is away from the hole 46.

The above embodiment has the following advantages.
(1) When the transmission 1 is removed from an automobile, the two ports 26a in the bleeder device 26 are brought into a blocked state and the oil pipe 25 is removed from the port 26a that is more distant from the pressure chamber 22. Then, the cylinder apparatus 11 is separated from the diaphragm spring 7 in the clutch. In this case, inflow and outflow of oil with respect to the pressure chamber 22 is prevented so that, even if the piston 17 is pushed in a direction to expand the volume of the pressure chamber 22 by the spring 20, the piston 17 will not be allowed to move in that direction. Thus, the piston 17 is held in the position within the movement range (between P2 and P1 in Fig. 5) and the movement of the piston 17 out of the movement range to the exposed portion R may be avoided.
   Consequently, sandwiching foreign matter adhered to the exposed portion R between piston 17 and the inner body 15 is appropriately prevented.
(2) The prevention of the oil inflow and outflow witch respect to the pressure chamber 22 of cylinder apparatus 11 as described above is achieved by the means for communicating or blocking the two ports 26a in the bleeder device 26 provided in the hydraulic circuit 32 for air bleeding. Provided that an additional switching valve is provided in the hydraulic circuit 32 in order to prevent the oil inflow and outflow with respect to the pressure chamber 22, in addition to the operation of attaching the bleeder device 26 to the hydraulic circuit 32, operation of attaching the switching valve to the hydraulic circuit 32 is necessary, which takes more labor. On the other hand, providing the means for communicating or blocking the two ports 26a in the bleeder device 26, the prevention of oil inflow and outflow is achieved and the above disadvantage does not occur.

The bleeder plug 45 of the bleeder device 26 not only operates to communicate or block the vent passage 48 through the rotational movement around the center line thereof but also operates to communicate or block the two ports 26a through the sliding movement in a direction of the center line thereof. The rotational movement and the sliding movement may be performed separately. Accordingly, during air bleeding, the oil passage 42 (the ports 26a) is brought into a communicated state through the sliding movement of the plug 45 and the vent passage 48 is brought into a communicated state through the rotational movement of the plug 45. Thus, bleeding of the air mixed in the oil in the oil passage 42 (hydraulic circuit 32) is performed. After the air bleeding is complete, the vent passage 48 is brought into a blocked state through the rotational movement of the plug 45. The sliding movement of the plug 45 is performed while the vent passage 48 is blocked, the communication or blockage of the oil passage 42 (the ports 26a) is possible. Thus, by performing the rotational movement and the sliding movement as appropriate, the bleeder device 26 may be switched into a desired state such as air bleeding or the communication or blockage of the oil passage 42 (the ports 26a).
(4)The direction of the rotational movement and the direction of the sliding movement by the bleeder plug 45 are different each other. Thus, operational error between the rotational movement and the sliding movement is prevented or reduced.

The above embodiment may be modified as follows.

As illustrated in Fig. 6 (e), male threads 54 may be formed on the outer peripheral surface of the bleeder plug 45 and female threads 55 for mating with the male threads 54 may be formed on the inner peripheral surface of the rubber material 44. In this case, when the bleeder plug 45 is rotated around the center line thereof, sliding movement of the plug 45 in the direction of the center line thereof occurs simultaneously due to the action of the male threads 54 and the female threads 55. Then, through the rotational movement of the plug 45, the plug 45 may be slid away from the hole 46 and located in the position where open end 48b of the vent passage 48 is communicated with the channel 47 to allow air bleeding. After the air bleeding is complete, through the rotational movement of the plug 45, the bleeder plug 45 may be held in the position away from the hole 46 and located in a position where the open end 48a of the vent passage 48 is blocked from the channel 47. In addition, through the rotational movement of the plug 45, the plug 45 may be slid between the position away from the hole 46 and the position for blocking the hole 46 while maintaining the disconnection between the open end 48a of the vent passage 48 and the channel 47. Accordingly, through the rotational movement of the plug 45 around the center line thereof, a state of the bleeder device 26 may be changed as desired, e.g., air bleeding or communicating or blocking oil passage 42 (between the ports 26a).

The cap 49 may be omitted.

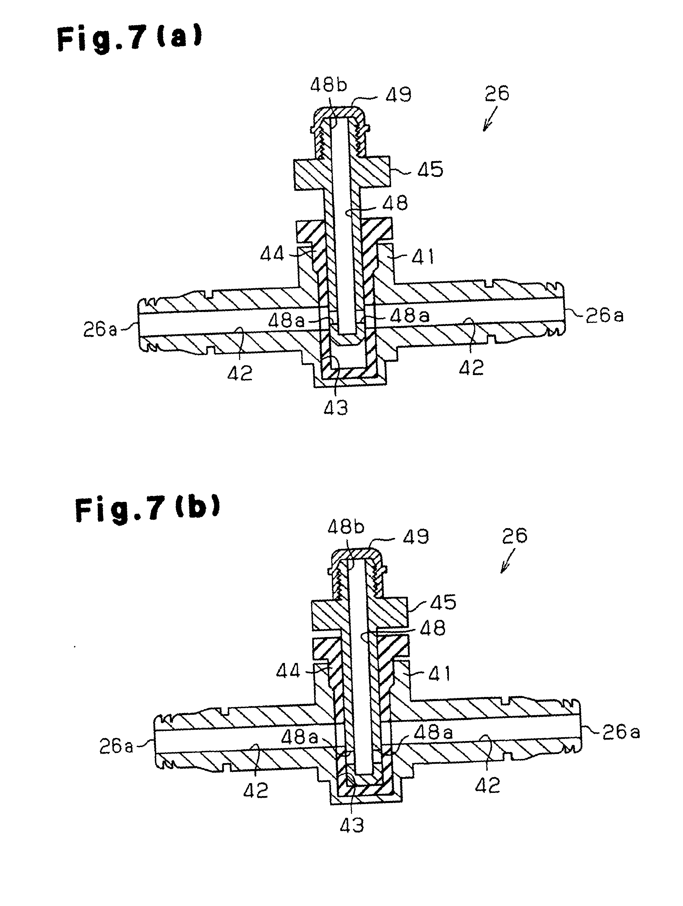

Figs. 7 (a) and (b) illustrate that the communication and blockage of the oil passage 42 connecting the two ports 26a is performed by the sliding movement of the bleeder plug 45 in the center line thereof and that the communication and blockage of the vent passage 48 is performed by the attachment and removal of the cap 49 from the bleeder plug 45.

In this example, the oil passage 42 extends straight and penetrates through the rubber material 44 in a radial direction thereof, and the open end 48a of the vent passage 48 is formed on both sides of the bleeder plug 45 in a radial direction thereof. As illustrated in Fig. 7 (a), the bleeder plug 45 is slid in a direction of the center line thereof to correspond to the open ends 48a to the oil passage 42, whereby the oil passage 42 (or the two ports 26a) is brought into a communicated state. As illustrated in Fig. 7 (b), the bleeder plug 45 is slid in a direction of the center line thereof to disconnect the open ends 48a from the oil passage 42 and to block the open ends 48a by the inner peripheral surface of the rubber material 44, whereby the oil passage 42 (or the ports 26a) is brought into a blocked state.

The cap 49, in this example, is formed of a material having sealing properties such as rubber and threadably engaged to the proximal end of the bleeder plug 45. Thus, the cap 49 is attached to or removed from the proximal end of the plug 45 by rotating the cap 49 around the center line of the plug 45. By sliding the plug 45 to a position where the oil passage 42 is brought into a communicated state and attaching or removing the cap 49 from the proximal end of the plug 45, the communication or blockage of the vent passage 48 is performed.

The above configuration of the bleeder device 26 also brings similar effects as the effects (1) to (4) as described above.

The communication or blockage of the oil passage 42 (between the two ports 26a) may be performed by the rotational movement of the bleeder plug 45. On the other hand, the communication or blockage of the vent passage 48 may be performed by the sliding movement of the bleeder plug 45.

Both the communication or blockage of the oil passage 42 (between the ports 26a) and the communication or blockage of the vent passage 48 may be performed by the sliding movement of the bleeder plug 45.

Both the communication or blockage of the oil passage 42 (between the ports 26a) and the connection or disconnection of the vent passage 48 may be performed by the rotational movement of the bleeder plug 45.

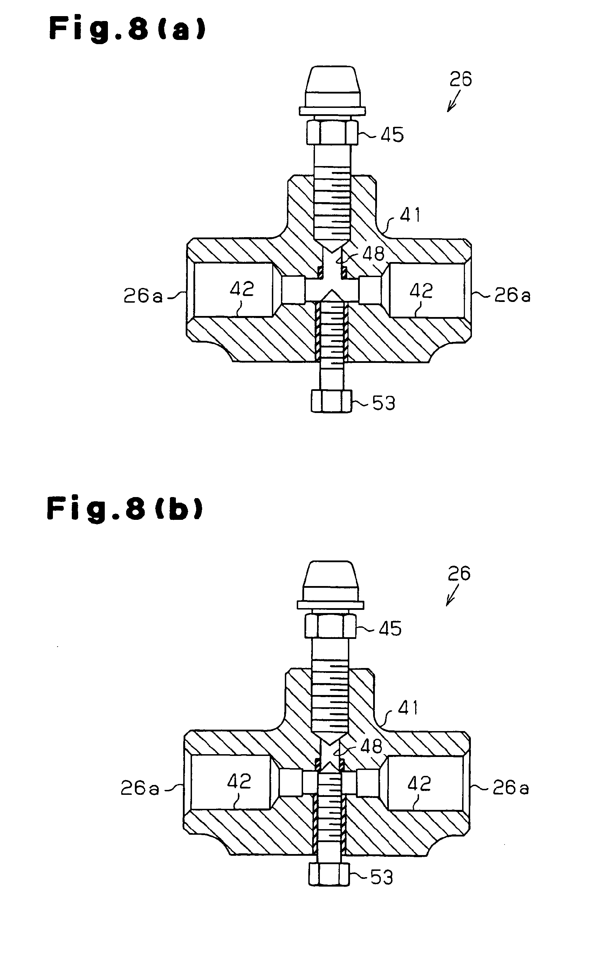

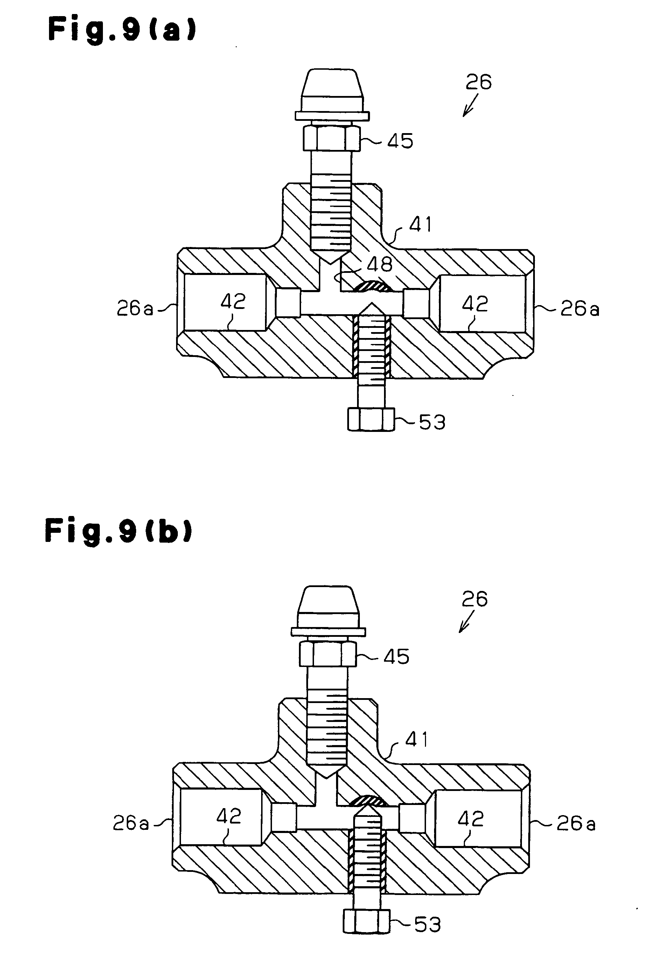

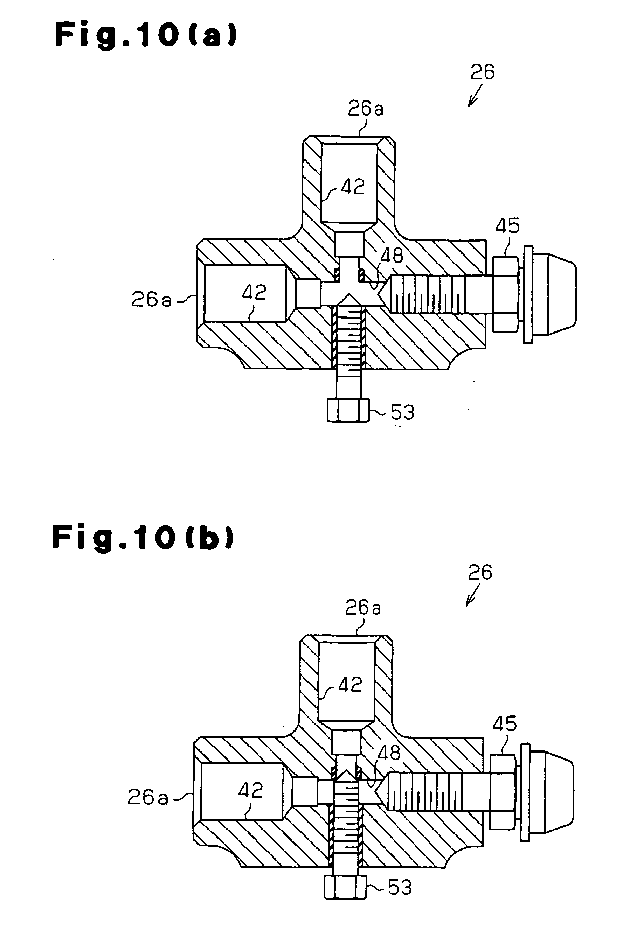

Figs. 8 to 10 illustrate that the bleeder plug 45 operates to communicate or block the vent passage 48 only and the means for communicating or blocking the oil passages 42 (between the ports 26a) is provided to the bleeder device 26 by disposing a switching valve 53 for communicating or blocking the oil passages 42 (or the ports) in main body 41. Figs. 8(a), 9(a) and 10(a) illustrate a communicated state of the oil passages 42 and Figs. 8(b), 9(b) and 10(b) illustrate a blocked state of the oil passages 42 by the switching valve 53.

In the examples of Figs. 8 to 10, the vent passage 48 is formed in the main body 41 and the bleeder plug 45 is screwed into or out of the passage 48 so that the communication or blockage of the passage 48 is achieved. Specifically, the bleeder plug 45 is screwed to bring the vent passage 48 in a blocked state and the bleeder plug 45 is unscrewed to bring the vent passage 48 in a communicated state.

Meanwhile, the switching valve 53 used in the examples of Figs. 8 to 10 is attached to the main body 41. By screwing the switching valve 53 into or out of the main body 41, the communication or blockage of the oil passages 42 is achieved. Specifically, the switching valve 53 is screwed to bring the oil passages 42 in a blocked state and the switching valve 53 is unscrewed to bring the oil passages 42 in a communicated state.

The configuration of bleeder devices 26 as illustrated in Figs. 8 to 10 also bring a similar effect as the effect (1) as described above. So long as the bleeder plug 45 includes a means for communicating or blocking the oil passages 42 as described in the above embodiments, provision of the switching valve 53 for communicating or blocking the oil passages 42 as illustrated in Figs. 8 to 10 in the bleeder device 26 is unnecessary. Accordingly, the bleeder device 26 can be reduced in size or miniaturized.

## Claims

1. A bleeder device (26) comprising
a main body (41) having a pair of ports (26a) and an oil passage (42) for connecting the ports (26a), wherein each of the ports (26a) is connectable to an pipe (25); and
a bleeder plug (45) having a means for communicating or blocking a vent passage (48) connected to the oil passage (42) and to outside, wherein the bleeder device (26) also comprises a means for communicating or blocking the ports (26a) in the oil passage (42) **characterized in that** the bleeder
plug (45) has the means for communicating or blocking the ports (26a) in the oil passage (42) separately from the means for communicating or blocking the vent passage (48).

2. The bleeder device (26) of claim 1, wherein the bleeder plug (45) is capable of performing a first movement for communicating or blocking the vent passage (48) and a second movement for communicating or blocking the ports (26a) in the oil passage (42), separately.

3. The bleeder device (26) of claim 2, wherein the direction of the first movement and the direction of the second movement are different.

4. The bleeder device (26) of claim 3, wherein the first movement includes one of rotational movement of the bleeder plug (45) around the center line thereof and sliding movement of the bleeder plug (45) in a direction of the center line thereof, and the second movement is the other of the rotational movement and the sliding movement.

5. The bleeder device (26) of claim 4, wherein the bleeder plug (45) is cylindrical in shape, rotatable around the center line and slidable in a direction of the center line, the first movement is the rotational movement around the center line and the second movement is the sliding movement in a direction of the center line,
the vent passage (48) includes a first open end (48b), formed in the bleeder plug (45) and opening to outside, and a second open end (48a), opening to an outer peripheral surface of the plug (45), and
in the first movement, the bleeder plug (45) communicate or blocks the second open end (48a) of the vent passage (48) to the oil passage (42).

6. The bleeder device (26) of claim 1, wherein the bleeder plug (45) is cylindrical in shape, includes male threads (54) at an outer peripheral surface thereof, and is threaded into the main body (41),
the vent passage (48) includes a first open end (48b), formed in the bleeder plug (45) and opening to outside, and a second open end (48a), opening to the outer peripheral surface of the plug (45),
communication or blockage of the vent passage (48) is performed by a rotational movement of the bleeder plug (45) around the center line thereof so that the second open end (48b) is communicated with or blocked from the oil passage (42), and
communication or blockage of the ports (26a) in the oil passage (42) is performed by a sliding movement of the bleeder plug (45) in a direction of the center line occurred simultaneously with the rotational movement due to the action of the male threads (54) during the rotational movement.

## Patentansprüche

1. Auslassvorrichtung (26) mit
einem Hauptkörper (41) mit einem Paar an Öffnungen (26a) und einem Ölkanal (42) zum Verbinden der Öffnungen (26a), wobei jede der Öffnungen (26a) mit einem Ölrohr (25) verbindbar ist; und
einem Auslasspfropfen (45) mit einer Einrichtung für eine Kommunikation oder ein Blockieren eines Belüftungskanals (48), der mit dem Ölkanal (42) und mit der Außenseite verbunden ist,
wobei die Auslassvorrichtung (26) außerdem eine Einrichtung für eine Kommunikation oder ein Blockieren der Öffnungen (26a) in dem Ölkanal (42) aufweist,
**dadurch gekennzeichnet, dass**
der Auslasspfropfen (45) die Einrichtung für eine Kommunikation oder ein Blockieren der Öffnungen (26a) in dem Ölkanal (42) separat von der Einrichtung für eine Kommunikation oder ein Blockieren des Belüftungskanals (48) aufweist.

2. Auslassvorrichtung (26) gemäß Anspruch 1, wobei der Auslasspfropfen (45) dazu in der Lage ist, eine erste Bewegung für eine Kommunikation oder ein Blockieren des Belüftungskanals (48) und eine zweite Bewegung für eine Kommunikation oder ein Blockieren der Öffnungen (26a) in dem Ölkanal (42) separat auszuführen.

3. Auslassvorrichtung (26) gemäß Anspruch 2, wobei die Richtung der ersten Bewegung und die Richtung der zweiten Bewegung verschieden sind.

4. Auslassvorrichtung (26) gemäß Anspruch 3, wobei die erste Bewegung eine Drehbewegung des Auslasspfropfens (45) um seine Mittellinie oder eine Gleitbewegung des Auslasspfropfens (45) in einer Richtung seiner Mittellinie umfasst, und die zweite Bewegung, die andere Bewegung ist, das heißt die Gleitbewegung oder die Drehbewegung.

5. Auslassvorrichtung (26) gemäß Anspruch 4, wobei der Auslasspfropfen (45) eine zylindrische Form hat, um die Mittellinie drehbar ist und in einer Richtung der Mittellinie gleitfähig ist, wobei die erste Bewegung die Drehbewegung um die Mittellinie ist und die zweite Bewegung die Gleitbewegung in einer Richtung der Mittellinie ist,
wobei der Belüftungskanal (48) ein erstes offenes Ende (48b), das in dem Auslasspfropfen (45) ausgebildet ist und zu der Außenseite hin offen ist, und ein zweites offenes Ende (48a) aufweist, das zu einer Außenumfangsfläche des Pfropfens (45) hin offen ist, und
in der ersten Bewegung der Auslasspfropfen (45) das zweite offene Ende (48a) des Belüftungskanals (48) mit dem Ölkanal (42) in Kommunikation bringt oder blockiert.

6. Auslassvorrichtung (26) gemäß Anspruch 1, wobei der Auslasspfropfen (45) eine zylindrische Form hat, Außengewinde (54) an seiner Außenumfangsfläche hat und in den Hauptkörper (41) geschraubt ist,
der Belüftungskanal (48) ein erstes offenes Ende (48b), das in dem Auslasspfropfen (45) ausgebildet ist und zu der Außenseite hin offen ist, und ein zweites offenes Ende (48a) aufweist, das zu der Außenumfangsfläche des Pfropfens (45) hin offen ist,
wobei die Kommunikation oder das Blockieren des Belüftungskanals (48) ausgeführt wird durch eine Drehbewegung des Auslasspfropfens (45) um seine Mittellinie in derartiger Weise, dass das zweite offene Ende (48b) mit dem Ölkanal (42) in Kommunikation gelangt oder gegenüber diesem blockiert wird, und
die Kommunikation oder das Blockieren der Öffnungen (26a) in dem Ölkanal (42) ausgeführt wird durch eine Gleitbewegung des Auslasspfropfens (45) in einer Richtung der Mittellinie, die gleichzeitig zu der Drehbewegung auftritt aufgrund der Wirkung der Außengewinde (54) während der Drehbewegung.

## Revendications

1. Dispositif de purge (26) comprenant
un corps principal (41) ayant une paire d'orifices (26a) et un passage d'huile (42) servant à raccorder les orifices (26a), où chacun des orifices (26a) peut être raccordé à un tuyau d'huile (25) ; et
un bouchon de purge (45) comprenant un moyen destiné à communiquer avec un passage d'évacuation (48) ou à obstruer celui-ci raccordé au passage d'huile (42) et à l'extérieur, où le dispositif de purge (26) comprend également un moyen destiné à communiquer avec les orifices (26a) ou à obstruer ces derniers dans le passage d'huile (42)
**caractérisé en ce que** le bouchon de purge (45) comprend le moyen destiné à communiquer avec les orifices (26a) ou à obstruer ces derniers dans le passage d'huile (42) séparément du moyen destiné à communiquer avec le passage d'évacuation (48) ou à obstruer celui-ci.

2. Dispositif de purge (26) de la revendication 1, dans lequel le bouchon de purge (45) est capable d'effectuer un premier mouvement pour communiquer avec le passage d'évacuation (48) ou pour obstruer celui-ci et un deuxième mouvement pour communiquer avec les orifices (26a) ou pour obstruer ces derniers dans le passage d'huile (42), séparément.

3. Dispositif de purge (26) de la revendication 2, dans lequel la direction du premier mouvement et la direction du deuxième mouvement sont différentes.

4. Dispositif de purge (26) de la revendication 3, dans lequel le premier mouvement comprend l'un des mouvements de rotation du bouchon de purge (45) autour d'un axe central et l'un des mouvements de glissement du bouchon de purge (45) dans une direction de l'axe central, et le deuxième mouvement comprend les deux autres mouvements de rotation et de glissement.

5. Dispositif de purge (26) de la revendication 4, dans lequel le bouchon de purge (45) est de forme cylindrique, pouvant tourner autour d'un axe central et pouvant coulisser dans une direction de celui-ci, le premier mouvement est le mouvement de rotation autour d'un axe central et le deuxième mouvement est le mouvement de glissement dans une direction de l'axe central,
le passage d'évacuation (48) comporte une première extrémité ouverte (48b), formée dans le bouchon de purge (45) et débouchant vers l'extérieur, et une deuxième extrémité ouverte (48a), débouchant vers une surface périphérique externe du bouchon (45), et
dans le premier mouvement, le bouchon de purge (45) communique avec la deuxième extrémité ouverte (48a) du passage d'évacuation (48) au passage d'huile (42) ou obstrue celle-ci.

6. Dispositif de purge (26) de la revendication 1, dans lequel le bouchon de purge (45) est de forme cylindrique, comporte des filetages mâles (54) au niveau de sa surface périphérique externe, et est fileté dans le corps principal (41),
le passage d'évacuation (48) comporte une première extrémité ouverte (48b), formée dans le bouchon de purge (45) et débouchant vers l'extérieur, et une deuxième extrémité ouverte (48a), débouchant vers la surface périphérique externe du bouchon (45),
la communication avec le passage d'évacuation (48) ou l'obstruction de celui-ci est effectuée par un mouvement de rotation du bouchon de purge (45) autour d'un axe central de sorte que la deuxième extrémité ouverte (48b) communique avec le passage d'huile (42) ou obstrue celui-ci, et
la communication avec les orifices (26a) dans le passage d'huile (42) ou l'obstruction de ces derniers est effectuée par un mouvement de glissement du bouchon de purge (45) dans une direction de l'axe central qui se produit simultanément avec le mouvement de rotation en raison de l'action des filetages mâles (54) pendant le mouvement de rotation.
